# EUROPÄISCHE PATENTANMELDUNG

(11) **EP 1 574 405 A1**
(43) Veröffentlichungstag der Anmeldung: **14.09.2005**
(21) Anmeldenummer: 05003075.8
(22) Anmeldetag: 14.02.2005
(51) Int. Cl.: B60R 21/20

(54) **Gassackmodul**

(30) Priorität: 20.02.2004 DE 202004002698 U
(71) Anmelder: TRW Automotive Safety Systems GmbH, 63743 Aschaffenburg (DE)
(72) Erfinder: Schneider, Michael, Dr., 63834 Sulzbach (DE); Hauer, Constantin, 63825 Schöllkrippen (DE); Limberger, Alexander, 63165 Mülheim/Main (DE); Scheuermann, Alfred, 69483 Wald-Michelbach (DE)
(74) Vertreter: Kitzhofer, Thomas

(57) **Zusammenfassung**

Ein Gassackmodul hat eine Abdeckkappe (10), einen unterhalb der Abdeckkappe (10) liegenden Ringraum (34) und einen im Ringraum (34) untergebrachten Gassack (36) mit einer ringförmigen Kammer (40), die sich um eine Einbuchtung (38), die nicht aufgeblasen wird, erstreckt. Die Einbuchtung (38) ist dadurch gebildet, daß ein Klemmabschnitt (44) der Gassackwand, der vom Einblasmund (39) des Gassacks (36) entfernt ist, bleibend an einer der Abdeckkappe (10) nahen Stirnwand (24) eines Diffusorkäfigs (18) oder eines Gasgenerators (16) befestigt ist. Die Abdeckkappe (10) besitzt ein bleibend an der Stirnwand (24) befestigtes Kappenzentrum (52), das im geöffneten Zustand des Gassackmoduls von einer ringförmigen Austrittsöffnung (60) umgeben ist. Ein als separates Teil vorgesehener Abstandshalter ist unterhalb der Abdeckkappe (10) und über der Stirnwand (24) angeordnet und fixiert den Klemmabschnitt (44) des Gassacks (36). Der Abstandshalter ist mittels eines eigenen Befestigungsmittels (28) an der Stirnwand (24) angebracht und hindert den gefalteten Gassack (36) daran, in das Volumen zwischen der Stirnwand (24) und einem darüberliegenden zentralen Kappenabschnitt zu ragen.

## Beschreibung

Die Erfindung betrifft ein Gassackmodul mit einer Abdeckkappe, einem unterhalb der Abdeckkappe liegenden Ringraum, einem im Ringraum untergebrachten Gassack mit einer ringförmigen Kammer, die sich um eine Einbuchtung, die nicht aufgeblasen wird, erstreckt, wobei die Einbuchtung dadurch gebildet ist, daß ein Klemmabschnitt der Gassackwand, der vom Einblasmund des Gassacks entfernt ist, bleibend an einer der Abdeckkappe nahen Stirnwand eines Diffusorkäfigs oder eines Gasgenerators befestigt ist, und wobei die Abdeckkappe ein bleibend an der Stirnwand befestigtes Kappenzentrum besitzt, das im geöffneten Zustand des Gassackmoduls von einer ringförmigen Austrittsöffnung umgeben ist.

Ein solcher ringförmiger Gassack ist beispielsweise aus der DE 202 22 019 oder der DE 197 49 914 C2 bekannt. Bei diesen Gassäcken wird üblicherweise ein Zentrumsabschnitt der Gassackvorderwand im Modul zurückgehalten, so daß sich vom Insassen aus gesehen eine Einbuchtung ergibt.

Aufgabe der Erfindung ist es, die Lage des Gassacks im gefalteten Zustand in dem dafür vorgesehenen Ringraum im Modul sicherzustellen und ein Verrutschen von gefalteten Gewebelagen zu verhindern, so daß der Entfaltungsvorgang ungehindert vonstatten gehen kann.

Diese Aufgabe wird durch ein gattungsgemäßes Gassackmodul gelöst, mit einem als separates Teil vorgesehenen Abstandshalter unterhalb der Abdeckkappe und über der Stirnwand, der zwischen sich und der Stirnseite den Klemmabschnitt des Gassacks fixiert und der mittels eines eigenen Befestigungsmittels an der Stirnwand angebracht ist und den gefalteten Gassack daran hindert, in das Volumen zwischen der Stirnwand und einem darüberliegenden zentralen Kappenabschnitt zu ragen.

Der Abstandshalter ist, wie gesagt, ein separates Teil und kann mit der Abdeckkappe lösbar verbunden sein.

Die Erfindung stellt sicher, daß nur die eine Gewebelage des Gassacks, die den Klemmabschnitt darstellt, zwischen der Stirnwand und der Abdeckkappe zu liegen kommt und dort geklemmt ist. Damit wird die Gassackentfaltung sehr gut kontrollierbar, und ohne zusätzliche Maßnahmen kann ein Verklemmen einer einzelnen Gewebelage im Zwischenraum zwischen Stirnwand und Abdeckkappe verhindert werden.

Der große Vorteil der Erfindung besteht auch darin, daß der Gassack nicht in die topfförmige Abdeckkappe hineingefaltet werden muß. Die Faltung des Gassacks kann außerhalb der Abdeckkappe erfolgen. Der Abstandshalter begrenzt das Gassackpaket radial einwärts, bis schließlich die Abdeckkappe auf das Paket samt Diffusorkäfig oder Gasgenerator aufgesetzt wird und am Diffusorkäfig oder am Gasgenerator befestigt wird.

Der Abstandshalter hat vorzugsweise eine zur Stirnwand parallele Unterseite, so daß der Klemmabschnitt großflächig zwischen zwei Flächen geklemmt wird. Darüber hinaus entsteht kein Spalt zwischen Stirnwand und Abstandshalter.

Bevorzugt ist der Abstandshalter ein nach oben offenes napfförmiges Teil, mit einem Boden und einer davon nach oben abstehenden Umfangswand. Diese Lösung erlaubt eine kompakte Ausführung in axialer Richtung (Gassackaustrittsrichtung), denn die Abdeckkappe ist üblicherweise in ihrem Kappenzentrum mit einem Emblem versehen und in diesem Bereich relativ dick. Somit kann dieses dickere Kappenzentrum großteils im Napf aufgenommen werden, er ragt in den Napf hinein und liegt am Boden an.

Darüber hinaus sollte der obere Rand der Umfangswand des napfförmigen Teils an der Unterseite der Abdeckkappe anliegen, damit hier kein Spalt zwischen diesen Teilen entsteht.

Das Kappenzentrum ist vorzugsweise mittels eines eigenen Befestigungsmittels an der Stirnwand befestigt. Der Diffusorkäfig oder der Gasgenerator bilden zusammen mit dem Napf eine Einheit, die durch deren eigenes Befestigungsmittel vormontiert wird, so daß diese Verbindung nicht mehr gelöst werden muß, wenn später die Abdeckkappe mittels der eigenen Befestigungsmittel an der Stirnwand arretiert wird. Damit kann sich auch kein Gassackgewebematerial mehr zwischen Abstandshalter und Diffusor schieben.

Der Diffusorkäfig oder der Gasgenerator sollten im Inneren des Gassacks angeordnet sein. Der Diffusorkäfig bildet in diesem Fall das Gassackhalteteil, das den Gassack im Bereich des Einblasmundes fixiert.

Der Abstandshalter kann auch noch eine andere wichtige Funktion einnehmen. Ist die ringförmige Austrittsöffnung mit unterschiedlicher radialer Breite über dem Umfang versehen, so könnte es zu einem stark unsymmetrischen Austrittsverhalten des Gassacks und zu einem unsymmetrischen Öffnungsverhalten der Abdeckkappe führen. Der Abstandshalter ist dann in der Lage, dieses unsymmetrische Entfaltungsverhalten bzw. Öffnungsverhalten zu verhindern oder mindern, indem er so unsymmetrisch angeordnet ist, daß er weiter in den breiteren Bereich der Austrittsöffnung hineinragt als in einem schmalen Bereich. Hier wirkt der Abstandshalter in Austrittsrichtung des Gassacks vor der Austrittsöffnung als eine Art Barriere.

Der Abstandshalter kann auch eine unsymmetrische Außenkontur haben und/oder zum Beispiel abschnittsweise seitlich über die Stirnwand hinausragen.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Schnittansicht durch das erfindungsgemäße Gassackmodul,
- Figur 2 eine perspektivische Ansicht eines beim erfindungsgemäßen Gassackmodul eingesetzten Abstandshalters.

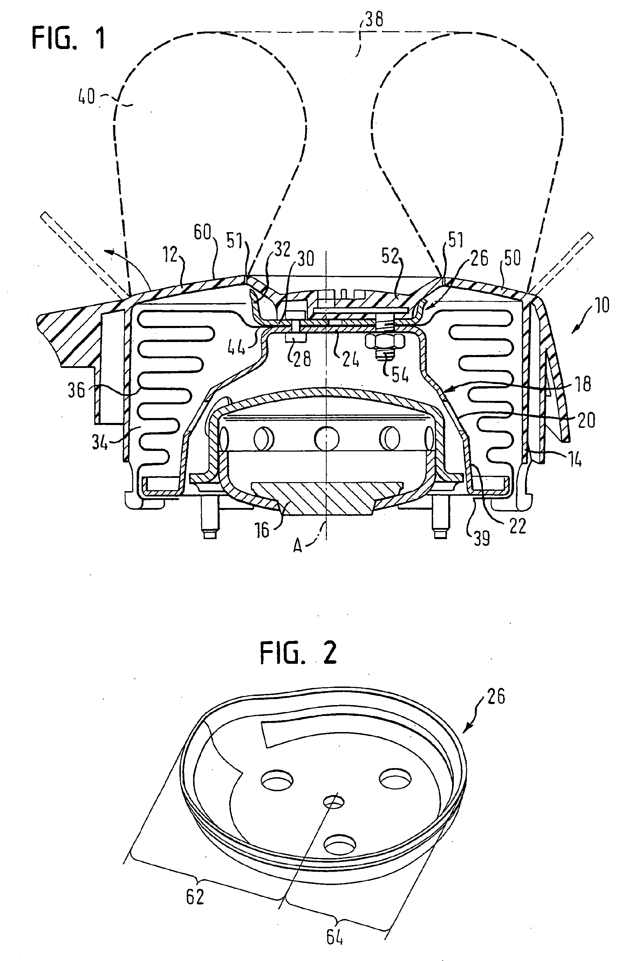

In Fig. 1 ist ein Gassackmodul gezeigt, das eine topfförmige Abdeckkappe 10 mit einer Frontwand 12 und einer Umfangswand 14 aufweist. Das Gassackmodul umfaßt weiter einen in die Abdeckkappe 10 hineinragenden Gasgenerator 16, der von einem Diffusorkäfig 18 umgeben ist, so daß zwischen Gasgenerator 16 und Diffusorkäfig 18 ein Diffusorraum gebildet ist. Der Diffusorkäfig 18 hat radiale Ausströmöffnungen 20 auf seiner Umfangswand 22 sowie eine zur Frontwand der Abdeckkappe 10 gerichtete ebene Stirnwand 24. Ein Abstandshalter in Form eines topfförmigen Teils 26 ist mit eigenen Befestigungsmitteln 28 (z.B. Niete, Schrauben und dergleichen) an der Stirnwand 24 befestigt. Das napfförmige Teil 26 hat einen ebenen Boden 30, der parallel zur Stirnwand 24 verläuft und eine davon nach oben abstehende zylindrische Umfangswand 32.

Zwischen der Umfangswand 14 der Abdeckkappe 10 und der Umfangswand 22 des Diffusorkäfigs 18 sowie dem napfförmigen Teil 26 wird ein unter der Frontwand 12 liegender Ringraum 34 zur Unterbringung eines Gassacks 36 begrenzt. Der Gassack 36 wird durch den Diffusorkäfig 18 im Bereich seines den Einblasmund definierenden Öffnungsrandes 39 gegen ein nicht gezeigtes Gehäuseteil geklemmt. Der Gassack 36 besitzt im aufgeblasenen Zustand (mit unterbrochenen Linien dargestellt) eine ringförmige Gestalt mit einer ringförmigen Kammer 40, die eine von vorne ausgehende Einbuchtung 38 besitzt, die dadurch gebildet wird, daß ein zentrischer Abschnitt der Gassackwand von einer freien Bewegung nach außen gehindert wird. Dieser zentrische Abschnitt wird als Klemmabschnitt 44 bezeichnet. Der Klemmabschnitt 44 liegt zwischen dem Boden 30 des napfförmigen Teils 26 und der Stirnwand 24 und wird zwischen diesen beiden Teilen großflächig geklemmt.

Die Frontwand 12 der Abdeckkappe 10 hat einen Klappenabschnitt 50. Der Klappenabschnitt 50 wird innenseitig durch eine Reißlinie 51 begrenzt und umgibt ein Abdeckkappenzentrum 52, das mittels eigener Befestigungselemente 54 (z.B. Schrauben-Muttern-Verbindungen) bleibend an der Stirnwand 24 befestigt ist. Das Kappenzentrum 52 bildet eine Vertiefung der Abdeckkappe 10, in der üblicherweise ein Emblem liegt, und ragt in das von oben offene Innere des napfförmigen Teils 26 hinein. Das Kappenzentrum 52 wird vollflächig gegen den Boden 30 gedrückt.

Wie Fig. 1 zeigt, liegt der obere Rand der Umfangswand 32 an der Unterseite der Abdeckkappe 10 an, so daß das gesamte zwischen der Stirnwand 24 und dem darüberliegenden, zentralen Kappenabschnitt definierte Volumen geschlossen ist und kein Gassackmaterial in diesen Bereich hineinragen kann. Der über der Stirnwand 24 liegende zentrale Kappenabschnitt ist derjenige Bereich der Abdeckkappe 10, der durch Axialprojektion (axial bezüglich der Mittellinie A des Gassackmoduls) der Stirnwand 24 auf die Kappe 10 definiert ist.

Die Abdeckkappe 10 deckt eine ringförmige Austrittsöffnung 60 für den Gassack 36 ab. Diese Austrittsöffnung 60 hat in Draufsicht unterschiedlich radial breite Bereiche. Wie in Fig. 1 zu sehen, ist der linke Bereich der Austrittsöffnung 60 deutlich breiter als der rechte Bereich der Austrittsöffnung 60.

Damit sich kein unsymmetrisches Öffnungsverhalten der Abdeckkappe 10 und auch kein unterschiedlich starkes Entfaltungsverhalten des Gassacks 36 in diesen unterschiedlich breiten Bereichen ergibt, ist das napfförmige Teil 26 so unsymmetrisch bezüglich der Mittelachse A ausgebildet und/oder angeordnet, daß sich ein breiterer Bereich 62 und ein schmälerer Bereich 64 ergibt. Der breitere Bereich 62 ragt, wie in Fig. 1 zu sehen ist, seitlich über die Stirnwand 24 hinaus und stellt eine in Austrittsrichtung des Gassacks 36 vor der Austrittsöffnung 60 gelegene Barriere dar, die die effektive später zum Austritt zur Verfügung stehende Fläche verringert. Im Gegensatz dazu schließt das napfförmige Teil 26 im Bereich 64 am rechten Ende der Stirnwand 24 nahezu bündig mit dieser ab und verengt den für den Austritt des Gassacks 36 zur Verfügung stehenden Kanal in keiner Weise.

Wie Fig. 1 auch zu entnehmen ist, ist die Stirnwand 24, welche kreisförmig ausgeführt ist, radial versetzt zur Mittelachse A angeordnet, so daß auch der Ringraum 34 auf der linken Hälfte der Fig. 1 eine größere radiale Breite als auf der rechten Hälfte hat. Damit kann gezielt das Austrittsverhalten beeinflußt werden, wenn beispielsweise angestrebt sein sollte, den Gassack 36 zuerst im unteren oder im oberen Bereich austreten zu lassen.

Das Modul wird folgendermaßen montiert. Zuerst wird der Diffusorkäfig 18 in den Gassack 36 eingesetzt. Anschließend wird das napfförmige Teil 26 mittels der Befestigungsmittel 28 mit der Stirnwand 24 verbunden. Diese Verbindung kann vor oder nach der Faltung des Gassacks 36 erfolgen. Die Faltung des Gassacks 36 erfolgt in einer Vorrichtung, die eine Umfangswand hat, die die Umfangswand 14 imitiert. Das gebildete Gassackpaket wird zum Beispiel über eine Folie oder dergleichen fixiert. Das Gassackpaket steht dabei nach oben nicht gegenüber der Umfangswand 32 des napfförmigen Teils 26 vor. Anschließend wird die Einheit aus gefaltetem Gassack 36, Diffusorkäfig 18 und napfförmigem Teil 26 in die Abdeckkappe 10 gesteckt und das Kappenzentrum 52 mit rückseitig integrierten, vorstehenden Schraubbolzen an der Stirnwand 24 befestigt. Schließlich wird der Gassack 36 von hinten in den Diffusorkäfig 18 eingebracht.

Zu betonen ist, daß alternativ auch der Diffusorkäfig 18 weggelassen werden kann, so daß an die Stelle des Diffusorkäfigs 18 der Gasgenerator 16 treten kann. Das napfförmige Teil 26 wird dann an die oberseitige Stirnwand des Gehäuses des Gasgenerators 16 gesetzt. Hier könnte natürlich gegebenenfalls auch ein kleines Zwischenteil vorgesehen sein. Da der Gasgenerator 16 natürlich nicht wie der Diffusorkäfig 18 für ein Eindringen eines Niets oder einer Schraube zur Verfügung steht, könnten von ihm nach oben angeschweißte Schraubbolzen abstehen, die der Befestigung des napfförmigen Teils 26 und/oder des Kappenzentrums 52 dienen.

## Patentansprüche

1. Gassackmodul, mit
einer Abdeckkappe (10),
einem unterhalb der Abdeckkappe (10) liegenden Ringraum (34),
einem im Ringraum (34) untergebrachten Gassack (36) mit einer ringförmigen Kammer (40), die sich um eine Einbuchtung (38), die nicht aufgeblasen wird, erstreckt, wobei die Einbuchtung (38) **dadurch** gebildet ist, daß ein Klemmabschnitt (44) der Gassackwand, der vom Einblasmund des Gassacks (36) entfernt ist, bleibend an einer der Abdeckkappe (10) nahen Stirnwand (24) eines Diffusorkäfigs (18) oder eines Gasgenerators (16) befestigt ist,
und wobei die Abdeckkappe (10) ein bleibend an der Stirnwand (24) befestigtes Kappenzentrum (52) besitzt, das im geöffneten Zustand des Gassackmoduls von einer ringförmigen Austrittsöffnung (60) umgeben ist,
**dadurch gekennzeichnet, daß**
ein als separates Teil vorgesehener Abstandshalter unterhalb der Abdeckkappe (10) und über der Stirnwand (24) angeordnet ist und den Klemmabschnitt (44) des Gassacks (36) fixiert und wobei der Abstandshalter mittels eines eigenen Befestigungsmittels (28) an der Stirnwand (24) angebracht ist und den gefalteten Gassack (36) daran hindert, in das Volumen zwischen der Stirnwand (24) und einem darüberliegenden zentralen Kappenabschnitt zu ragen.

2. Gassackmodul nach Anspruch 1, **dadurch gekennzeichnet, daß** der Abstandshalter eine zur Stirnwand (24) parallele Unterseite hat.

3. Gassackmodul nach Anspruch 1 oder 2, **dadurch gekennzeichnet, daß** der Abstandshalter ein nach oben offenes napfförmiges Teil (26) ist, mit einem Boden (30) und einer vom Boden (30) nach oben abstehenden Umfangswand (32).

4. Gassackmodul nach Anspruch 3, **dadurch gekennzeichnet, daß** der über dem napfförmigen Teil (26) liegende zentrale Kappenabschnitt in das napfförmige Teil (26) hineinragt und an dem Boden (30) anliegt.

5. Gassackmodul nach Anspruch 3 oder 4, **dadurch gekennzeichnet, daß** die Umfangswand (32) einen oberen Rand aufweist und der obere Rand der Umfangswand (32) an der Unterseite der Abdeckkappe (10) anliegt.

6. Gassackmodul nach einem der vorhergehenden Ansprüche, **dadurch gekennzeichnet, daß** das Kappenzentrum (52) mittels eines eigenen Befestigungselements (54) an der Stirnwand (24) arretiert ist.

7. Gassackmodul nach einem der vorhergehenden Ansprüche, **dadurch gekennzeichnet, daß** der Diffusorkäfig (18) im Inneren des Gassacks (36) angeordnet ist.

8. Gassackmodul nach einem der vorhergehenden Ansprüche, **dadurch gekennzeichnet, daß** die ringförmige Austrittsöffnung (60) Bereiche mit unterschiedlicher radialer Breite hat und daß der Abstandshalter so symmetrisch ausgebildet oder angeordnet ist, daß er seitlich weiter in einen breiteren Bereich (62) hineinragt als in einen schmalen Bereich (64).

9. Gassackmodul nach Anspruch 8, **dadurch gekennzeichnet, daß** der Abstandshalter eine unsymmetrische Außenkontur hat.

10. Gassackmodul nach einem der vorhergehenden Ansprüche, **dadurch gekennzeichnet, daß** der Abstandshalter abschnittsweise seitlich über die Stirnwand (24) hinausragt.

11. Gassackmodul nach einem der vorhergehenden Ansprüche, **dadurch gekennzeichnet, daß** der gefaltete Gassack (36) im Bereich des Abstandshalters in Richtung Abdeckkappe (10) nicht über den Abstandshalter hinausragt.
